# EUROPEAN PATENT APPLICATION

(11) **EP 3 984 951 A1**
(43) Date of publication of application: **20.04.2022**
(21) Application number: 21208411.5
(22) Date of filing: 28.09.2018
(51) Int. Cl.: C01B 32/23, C01B 32/225, C01B 32/192, C01B 32/15

(54) **METHODS FOR THE PRODUCTION OF GRAPHITE OXIDE**

(30) Priority: 02.10.2017 US 201762566685 P
(62) Divisional of application: 18792637.3
(71) Applicant: Cabot Corporation, Boston, MA 02210 (US)
(72) Inventor: GROSZ, Ron, Billerica, 01821 (US); KYRLIDIS, Agathagelos, Billerica, 01821 (US)
(74) Representative: Grünecker Patent- und Rechtsanwälte PartG mbB

(57) **Abstract**

Methods for the production of reduced graphene oxide worm (rGOW) particles. Graphite particles are placed in mixture of nitric acid and sulfuric acid. A supply of chlorate is provided to the graphite reaction mixture while it is agitated by a sparger. The resulting graphite oxide slurry is pumped to a tangential filtration system where it is purified and concentrated. The concentrated slurry is then fed to a high temperature spray dryer where it is simultaneously dried and chemically reduced to produce rGOW particles.

## Description

### CROSS REFERENCE TO RELATED APPLICATION

This application claims the benefit of U.S. Provisional Application No. 62/566,685, filed on October 2, 2017, hereby incorporated by reference.

### FIELD OF THE DISCLOSURE

This disclosure relates to graphene oxide, and in particular, to the production of reduced graphene oxide particles.

### BACKGROUND

Graphenes are planar, hexagonal carbon-based structures that, when stacked together, form graphite. Graphenes can be formed by physically removing individual layers of graphene from graphite or by expanding graphite particles, causing adjacent graphene layers to separate. Graphite particles can be oxidized to produce particles of graphite oxide and can include oxygen atoms that are covalently bonded to the carbon lattice. Graphite oxide, like graphite, can be expanded by overcoming the forces that hold the graphene sheets together. The resulting oxygenated planar carbon structures are referred to as graphene oxide.

### SUMMARY

In one aspect, a reduced graphite oxide worm (rGOW) particle is provided, the rGOW particle having a BET surface area of greater than 400 m²/g, a crystallinity of <30%, a decomposition energy of < 100 J/g, a density of <10 g/L and no discernible graphite peak in the XRD spectrum between 25° and 30°.

In another aspect, reduced graphite oxide worm particles are provided, the rGOW particles having a metal content of less than 1000 ppm by weight. The particles can have a multi-valent metal content of less than 100 ppm by weight and can include less than 50 ppm by weight of each of the multi-valent metals. They may have a BET surface area of greater than 400 m²/g, a density of less than 10 g/L, a crystallinity of <30% and a decomposition energy of < 100 J/g and can exhibit an XRD peak between 25° and 30° that is less than 10% or less than 1% of the height of an equivalent graphite peak between 25° and 30°. The reduced graphite oxide worm particles may exhibit no detectable XRD peaks between 25° and 30°.

In another aspect, a method of oxidizing graphite to produce graphite oxide is disclosed, the method comprising combining graphite, nitric acid and sulfuric acid to form a graphite mixture, feeding a chlorate solution into the graphite mixture, sparging the graphite mixture while feeding the chlorate solution into the graphite mixture, ceasing the chlorate feed when the total amount of chlorate added reaches the range of 2.5 to 6.0 g chlorate per gram of graphite, wherein the total water to acid ratio is less than 0.43:1, less than 0.40:1, less than 0.35:1, less than 0.30:1 or less than or equal to 0.26:1. The ratio of the total amount of water added to the total amount of anhydrous acid added, by weight, can be less than .33:1, less than .30:1 or less than 0.27:1. The chlorate solution can have a chlorate to water ratio, by weight, of between 1:1 and 2:1. The method can include sparging a gas or gas mixture through the graphite mixture after ceasing the chlorate feed. The ratio of nitric acid to sulfuric acid, by weight, can be in the range of 0.25:1 to 0.35:1 on an anhydrous basis. The mixture can be agitated by sparging a purge gas through the mixture during the feeding of the chlorate solution. The reaction mixture can be maintained at a temperature of greater than 30°C. A mixture of sulfuric acid and nitric acid can be added to the graphite, and the sparging can continue until the concentration of chlorine dioxide in the graphite mixture drops below 1000 ppm, 100 ppm, 10 ppm, 1 ppm or 0.1 ppm. The graphite can be oxidized in a bubble column reactor in the absence of a mechanical agitator. Greater than 95%, 98% or 99% of the added chlorate can be reacted in less than 10 hours. The chlorine dioxide concentration in a headspace above the graphite mixture can be reduced to less than 500 or less than 100 ppm in less than 12 hours, less than 10 hours or less than 8 hours. The method can include partially reducing the oxidized graphite to obtain a rGOW particle having a BET surface area of greater than 400 m²/g, a crystallinity of <30%, a Raman D/G band ratio of >1.0 and/or no discernible graphite peak in the XRD spectrum between 25° and 30°. The weight ratio of total acid to graphite can be less than 15:1, less than 20:1, less than 25:1, less than 30:1, or less than 40:1. The weight ratio of total water to graphite in the graphite mixture, after ceasing the chlorate feed, can be less than 11:1, less than 10:1, less than 9:1, less than 8:1, less than 7:1 or less than 6:1.

In another aspect, a method of treating a graphite oxide slurry is disclosed, the method comprising flowing the graphite oxide slurry comprising a fluid and graphite oxide particles across a tangential flow filtration membrane at a tangential flow rate of less than or equal to 3 m/s, exchanging a low pH carrier fluid for a carrier fluid of a higher pH to produce a graphite oxide slurry having a pH of greater than 1, and concentrating graphite oxide particles in the slurry to a concentration of greater than 5% by weight. The method may be carried out with a transmembrane pressure of between 5 and 15 psi, between 6 and 12 psi, or between 6 and 10 psi. The graphite oxide slurry can be circulated through an enclosed loop wherein any pressure drop in the enclosed loop is less than 10 psi. The permeate flow rate through the membrane can be greater than 150, 200 or 250 liters per hour per square meter of membrane. The method can include pressurizing a retentate reservoir to greater than 5 psi. The fluid content of the slurry can be reduced to increase the concentration of the graphite oxide particles from an initial concentration to greater than 5 times the initial concentration.

In another aspect, an apparatus for treating a slurry of graphite oxide particles is provided, the apparatus comprising a tangential flow membrane, a pressurized retentate reservoir in fluid communication with the tangential flow membrane, a recirculation pump in fluid communication with the tangential flow membrane and the retentate reservoir, wherein the pressure differential between the pressurized retentate reservoir and a high pressure side of the tangential flow membrane is less than 10, 8, 6 or 5 psi. The tangential flow membrane can be a tubular ceramic membrane having a particle exclusion pore size of between 1 and 2 µm. The apparatus can include a recirculation flow path where the flow path includes no angles of greater than 45°.

In another aspect, a method of making reduced graphite oxide worm particles is described, the method comprising introducing a mixture of graphite oxide particles and a carrier fluid into a chamber at a temperature of greater than 300°C, and reducing the oxygen content of the graphite particles by greater than 50% by weight to produce reduced graphite oxide worm particles. The mixture can comprise a slurry of graphite oxide particles in water. The temperature of the chamber can be greater than 500°C or greater than 700°C. The method can include spraying a slurry of graphite oxide and water into the chamber, and spraying can include feeding a first stream comprising graphite oxide particles and a second stream comprising an atomizing gas. The method can include injecting drying gas at a temperature of greater than 900°C into the chamber. Covalently bound oxygen is removed from the graphite oxide particles, and the particles may have a residence time in the chamber of less than 10 seconds, less than 5 seconds, less than 2 seconds or less than 1 second. The method can expand the graphite oxide particles to include multiple graphene platelets that are not in parallel planes. The graphite oxide particles can have a density that is at least twice the density of the reduced graphite oxide particles. The resulting reduced graphite oxide particles can have a decomposition energy that is at least 20%, 30%, 40% or 50% less than the decomposition energy of the graphite oxide particles. The chamber can be heated by a hot gas stream or by radiant energy and the particles can be dried and reduced in less than 10 seconds, less than 5 seconds or less than 1 second. The mixture can contain more than 5% graphite oxide particles by weight. The fluid component of the mixture can be vaporized in less than 1 second after introducing the mixture into the chamber. The resulting reduced graphite oxide worms can have a BET surface area of greater than 600 m²/g.

In another aspect, a high temperature spray drying apparatus is disclosed, the apparatus comprising a spray nozzle including an orifice in fluid communication with a reaction vessel, the spray nozzle orifice configured to spray a slurry into the reaction vessel. The spray nozzle can be a bifluid nozzle and can be cooled. The spray drying apparatus can include a cooling gas inlet in fluid communication with the reaction vessel and downstream of a reaction vessel midline.

### BRIEF DESCRIPTION OF THE DRAWINGS

Various aspects of at least one example are discussed below with reference to the accompanying figures, which are not intended to be drawn to scale. The figures are included to provide an illustration and a further understanding of the various aspects and examples, and are incorporated in and constitute a part of this specification, but are not intended to limit the scope of the disclosure. The drawings, together with the remainder of the specification, serve to explain principles and operations of the described and claimed aspects and examples. In the figures, each identical or nearly identical component that is illustrated in various figures is represented by a like numeral. For purposes of clarity, not every component may be labeled in every figure.
FIG. 1a is a schematic representation of a graphite particle;
FIG. 1b is a schematic representation of a reduced graphene oxide worm particle;
FIG. 2 is a scanning electron microscopy (SEM) photograph of a reduced oxide worm particle;
FIGS. 3A-3C illustrate three different embodiments of a graphite oxidation system;
FIG. 4 is an engineering diagram of one embodiment of a purification and concentration system;
FIG. 5 is a differential scanning calorimetry (DSC) scan of graphite oxide;
FIG. 6 is an accelerated rate calorimetry (ARC) scan of graphite oxide;
FIG. 7 is a cross-sectional view of one embodiment of a high temperature spray dryer;
FIG. 8 is a graph showing the rate of oxidation over time for four different reaction embodiments;
FIG. 9 is a graph showing the rate of oxidation during the purge phase of the four different reaction embodiments of FIG. 8;
FIG. 10 is a graph illustrating the production of chlorine dioxide during the oxidation phase for two different embodiments;

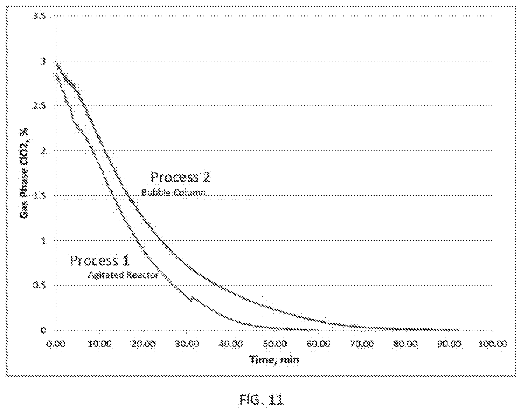

FIG. 11 is a graph illustrating the gaseous chlorine dioxide levels during the purge phase of the reactions shown in FIG. 10;
FIG. 12 is a graph comparing the production of chlorine dioxide in two reactions run at different temperatures;
FIG. 13 is a graph showing chlorine dioxide levels in the head space during the purge phase of the examples of FIG. 12; and
FIG. 14 is a flow chart showing the process of one embodiment of a method to produce rGOW particles.

### General Overview -

Graphite oxide can be produced from graphite by combining graphite particles with a mixture of sulfuric acid and nitric acid followed by the addition of a strong oxidizer such as chlorate ion (Staudenmaier reaction). The oxidation process results in the formation of graphite including covalently bonded oxygen in the form of, for example, hydroxides, epoxides and carboxylic acid groups. This is in contrast to intercalated graphites in which guest atoms or molecules are non-covalently retained between layers of graphene. The graphite oxide can be produced in a batch process in which chlorate ion, that can be provided as an aqueous salt solution, is added slowly to the mixture of graphite and strong acids. The slow addition of chlorate to the graphite mixture results in oxidation of the graphite as well as the production of chlorine dioxide (ClO₂). The amount of chlorine dioxide produced can provide an indication of the amount of oxidation that is occurring. After the addition of the chlorate is complete, the reaction can be allowed to run to completion and chlorine dioxide is removed from the system. The reaction can then be quenched, for example by adding the mixture to deionized (DI) water. The oxidized graphite oxide product can then be dried or, in some cases, remain as an aqueous slurry of graphite oxide particles.

Graphite oxide can be exfoliated into individual graphene oxide platelets by, for example, sonicating a liquid suspension. Graphite oxide particles can also be expanded and chemically reduced to produce graphene oxide particles having a greater surface area and lower oxygen content than the graphite oxide particles from which they are derived. One technique for expansion and reduction is thermal treatment. For example, dried graphite oxide particles can be exposed to temperatures exceeding 500°C in an inert atmosphere to produce expanded graphite oxide having a BET surface area of greater than 500 m²/g.

In one aspect, methods of producing graphite oxide (GO) are disclosed herein that provide for efficient oxidation of graphite over a short amount of time while using smaller quantities of reagents when compared to known techniques. Graphite particles are first combined with a mixture of nitric acid and sulfuric acid. A strong oxidizer such as chlorate ion is fed into the mixture over time to form covalently bonded oxygen groups on the graphene layers that comprise the graphite. When compared to currently available techniques, less acid may be required to produce the same quantity of graphite oxide at the same level of oxidation. In a related embodiment, the ratio of total water to anhydrous acid can be kept to a ratio that is less than 0.30:1 by weight. The oxidation methods herein can be used to produce graphite oxide particles that can be reduced to produce rGOW particles that have BET surface areas of at least 600 m²/g. The production of graphite oxide can comprise two stages, the first being the reaction (oxidation) stage and the second being the purge phase. In the reaction phase, chlorate ion is provided to the reaction medium and graphite is oxidized to produce graphite oxide. In the purge phase, residual chlorine dioxide is purged from the reaction medium so that the resulting graphite oxide can be safely handled. In some embodiments, the total time for completing both the reaction phase and the purge phase can be less than 12 hours, less than 10 hours, or less than 8 hours. For example, the reaction phase may be completed in less than 8 hours, less than 6 hours, less than 5 hours, less than 4 hours or less than 3 hours, and the purge phase may be completed in less than 3 hours or less than 2 hours. This is in contrast to other techniques that can require more than 24 hours from start to finish. Oxygen level in the graphite oxide particles can be greater than 20%, 30% or 40%. At least 95% of the chlorate is reacted and the chlorine dioxide is less than 100 ppm.

In one set of embodiments, the reaction mixture of graphite, nitric acid and sulfuric acid can be agitated using a flow of gas rather than by using mechanical stirring. Gas can be flowed through the reaction medium using, for example, a sparger, and in some embodiments the reaction vessel can comprise a bubble column reactor. In addition to agitating the reaction medium, it has been found that the gas flow is effective at removing chlorine dioxide during the chlorate addition phase, during the purge phase, or during both phases. Sparging can be particularly useful when the scale of reaction is increased, because larger reaction vessels have smaller gas/liquid interface surface area to liquid volume ratios. When a graphite oxidation reaction relies on sweeping the headspace to remove chlorine dioxide, any transfer of chlorine dioxide from the liquid medium to the headspace is dependent on the size of the gas/liquid interface. As the volume of a reaction vessel is increased, the ratio of the area of the gas/liquid interface to the volume of reaction medium decreases, so the larger the reaction vessel, the less effective the removal of chlorine dioxide by stirring. Flowing a gas through the reaction medium accelerates the removal of chlorine dioxide regardless of the size of the gas/liquid interface. As chlorine dioxide is both toxic and reactive, the gas flow rate can be chosen to remove chlorine dioxide at a rate that keeps the concentration of chlorine dioxide in the headspace below dangerous levels. After exiting the headspace area, the chlorine dioxide can be trapped and disposed of safely. In some cases, the gas flow through the reaction medium can also be accompanied by stirring.

In another aspect, graphite oxide particles can be purified and/or concentrated using tangential filtration. An aqueous slurry of graphite oxide particles can be passed over a tangential flow membrane for multiple cycles while concentrating the graphite particles and exchanging any remaining acid or other impurities in the slurry with water. In various embodiments, the tangential flow membrane may have a pore size of less than 5 µm, less than 2 µm, less than 1.5 µm, less than 1.0 micron, less than 0.5 micron, less than 0.25 micron, greater than 0.5 µm, greater than 1.0 micron or greater than 2.0 micron. Tangential flow velocity across the membrane may be less than 10 m/s, less than 5 m/s, less than 3 m/s, less than 2 m/s, greater than 1 m/s or greater than 2 m/s. Using this tangential flow filtration technique, the graphite oxide content of the slurry can be increased from a starting concentration by weight of about 1% to a final concentration in the slurry of greater than 5%, greater than 7%, greater than 9% or greater than 12%. The pH of the concentrated aqueous slurry can be neutralized by adding a base such as ammonium hydroxide that can raise the pH of the slurry to greater than 2, greater than 4, greater than 5 or greater than 6.

The reduced graphite oxide worm particles disclosed herein can be of high purity and may be comprised of less than 3%, less than 2% or less than 1% by weight of elements other than carbon and oxygen. In various embodiments, amounts of nitrogen and sulfur can each be less than 1% by weight. The particles may contain less than 1%, less than 1000 ppm, or less than 100 ppm, by weight, of metals. For example, the rGOW particles may include less than 1000 ppm of alkali metals and may include less than 100 ppm, less than 50 ppm or less than 30 ppm of multi-valent metals, including the transition metals and/or alkaline earth metals. Individual metals may be present at less than 30 ppm, less than 20 ppm, less than 10 ppm or less than 5 ppm. For example, the rGOW particles may include less than 30 ppm iron, less than 20 ppm titanium, less than 1000 ppm sodium and less than 20 ppm potassium. The same particles may include less than 5 ppm of each of the other metals. Metal content of the particles can be analyzed using inductively coupled plasma spectroscopy (ICP) by forming a suspension of the particles in a carrier fluid and atomizing the suspension. Results are reported on a ppm by weight basis that is based on the mass of the rGOW particles.

In another aspect, graphite oxide can be dried and chemically reduced in a single process. For example, an aqueous slurry of graphite oxide in water can be injected into a reaction chamber at a temperature of greater than 300°C. The particles are simultaneously dried and chemically reduced to provide lower energy, higher surface area, reduced graphene oxide worm (rGOW) particles.

In embodiments the present invention provides the following:
1. Reduced graphite oxide worm particles having a metal content of less than 1000 ppm by weight.
2. The reduced graphite oxide worm particles of embodiment 1 wherein the particles have a multi-valent metal content of less than 100 ppm by weight.
3. The reduced graphite oxide worm particles of embodiment 2 wherein the particles include less than 50 ppm by weight of each of the multi-valent metals.
4. The reduced graphite oxide worm particles of any of embodiments 1-3 wherein the particles have a BET surface area of greater than 400 m²/g, a density of less than 10 g/L, a crystallinity of <30% and a decomposition energy of < 100 J/g.
5. The reduced graphite oxide worm particles of any of embodiments 1-4 wherein the particles exhibit an XRD peak between 25° and 30° that is less than 10% or less than 1% of the height of an equivalent graphite peak between 25° and 30°.
6. The reduced graphite oxide worm particles of any of embodiments 1-5 wherein there are no detectable XRD peaks between 25° and 30°.
7. A method of making reduced graphite oxide worm particles, the method comprising:
   introducing a mixture of graphite oxide particles and a carrier fluid into a chamber at a temperature of greater than 300°C; and
   reducing the oxygen content of the graphite particles by greater than 50% by weight to produce reduced graphite oxide worm particles.
8. The method of embodiment 7 wherein the mixture comprises a slurry of graphite oxide particles in water.
9. The method of embodiment 7 or 8 wherein the temperature of the chamber is greater than 500°C or greater than 700°C.
10. The method of any of the preceding embodiments wherein introducing comprises spraying a slurry of graphite oxide and water into the chamber.
11. The method of embodiment 10 wherein spraying comprises feeding to a spray nozzle a first stream comprising the graphite oxide particles and a second stream comprising an atomizing gas.
12. The method of any of the preceding embodiments including introducing the graphite oxide and carrier fluid via a cooled nozzle.
13. The method of any of the preceding embodiments comprising injecting drying gas at a temperature of greater than 900°C into the chamber.
14. The method of any of the preceding embodiments wherein reducing comprises removing covalently bound oxygen from the graphite oxide particles.
15. The method of any of the preceding embodiments wherein the particles have a residence time in the chamber of less than 10 seconds, less than 5 seconds, less than 2 seconds or less than 1 second.
16. The method of any of the preceding embodiments comprising expanding the graphite oxide particles to include multiple graphene platelets that are not in parallel planes with each other.
17. The method of any of the preceding embodiments wherein a density of the graphite oxide particles is at least twice a density of the reduced graphite oxide particles.
18. The method of any of the preceding embodiments wherein the reduced graphite oxide particles have a decomposition energy that is at least 20%, 30%, 40% or 50% less than the decomposition energy of the graphite oxide particles.
19. The method of any of the preceding embodiments wherein the chamber is heated by a hot gas stream and by radiant energy.
20. The method of any of the preceding embodiments wherein particles are dried and reduced in less than 10 seconds, less than 5 seconds or less than 1 second.
21. The method of any of the preceding embodiments wherein the fluid component of the mixture is vaporized in less than 1 second after introducing the mixture into the chamber.
22. The method of embodiment 21 wherein the reduced graphite oxide worms have a BET surface area of greater than 600 m²/g.
23. The method of any of the preceding embodiments where the mixture of graphite oxide particles and carrier fluid contains more than 5 wt % graphite oxide particles.
24. A high temperature spray drying apparatus comprising:
   a spray nozzle including an orifice in fluid communication with a reaction vessel, the spray nozzle orifice configured to spray a slurry into the reaction vessel; and
   a cooling jacket surrounding at least a portion of the spray nozzle.
25. The apparatus of embodiment 24 wherein the spray nozzle comprises a bifluid nozzle.
26. The high temperature spray drying apparatus of any of embodiment 24 or 25 comprising a cooling gas inlet in fluid communication with the reaction vessel and downstream of a reaction vessel midline.
27. The apparatus of any of embodiments 24-26 wherein the apparatus includes both a hot gas source and a radiant heat source.
46. A method of treating a graphite oxide slurry, the method comprising:
   flowing the graphite oxide slurry comprising a fluid and graphite oxide particles across a tangential flow filtration membrane at a tangential flow rate of less than or equal to 3 m/s;
   exchanging a low pH carrier fluid for a carrier fluid of a higher pH to produce a graphite oxide slurry having a pH of greater than 1; and
   concentrating graphite oxide particles in the slurry to a concentration of greater than 5% by weight.
47. The method of embodiment 46 wherein a transmembrane pressure is between 5 and 15 psi, between 6 and 12 psi, or between 6 and 10 psi.
48. The method of embodiment 46 or 47 wherein the graphite oxide slurry is circulated through an enclosed loop wherein any pressure drop in the enclosed loop is less than 10 psi.
49. The method of any of embodiments 46-48 wherein a permeate flow rate through the membrane is greater than 150, 200 or 250 liters per hour per square meter of membrane.
50. The method of any of embodiments 46-49 comprising pressurizing a retentate reservoir to greater than 5 psi.
51. The method of any of embodiments 46-50 comprising reducing the fluid content of the slurry to increase the concentration of the graphite oxide particles from an initial concentration to greater than 5 times the initial concentration.
52. An apparatus for treating a slurry of graphite oxide particles, the apparatus comprising:
   a tangential flow membrane;
   a pressurized retentate reservoir in fluid communication with the tangential flow membrane; and
   a recirculation pump in fluid communication with the tangential flow membrane and the retentate reservoir, wherein the pressure differential between the pressurized retentate reservoir and a high pressure side of the tangential flow membrane is less than 10, 8, 6 or 5 psi.
53. The apparatus of embodiment 52 wherein the tangential flow membrane is a tubular ceramic membrane having a particle exclusion pore size of between 1 and 2 µm.
54. The apparatus of any of embodiments 52-53 wherein the apparatus includes a recirculation flow path and the flow path includes no angles of greater than 45°

### DETAILED DESCRIPTION

Reduced graphene oxide worm structures -

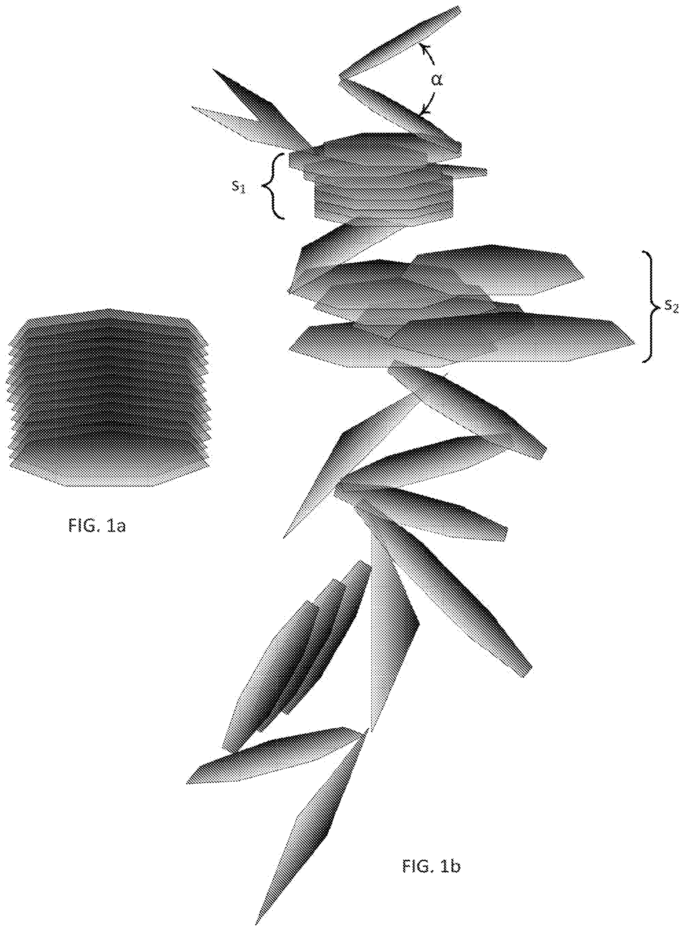

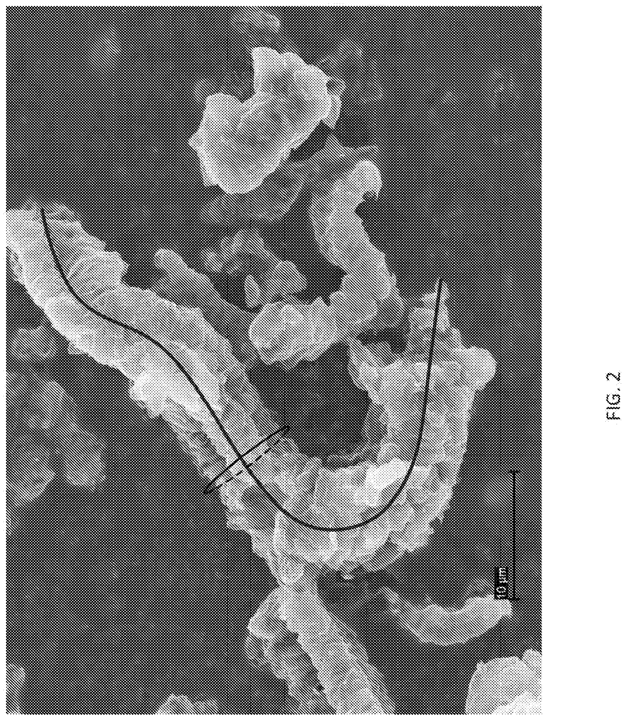

The processes described herein can be used to produce reduced graphene oxide worm (rGOW) structures, or particles. An rGOW particle can comprise any number of reduced oxidized graphene platelets, and at least some of the platelets are in a plane that is not parallel with that of an adjacent platelet. See a schematic representation in FIG. 1b. Although the rGOW platelets are referred to as planar, they are typically not as planar as, for example, graphene sheets, but rather include wrinkles and deformities that result from the oxidation/reduction processes by which the particles have been treated. As a result, the rGOW platelets are thicker than graphene sheets although they still retain a generally planar shape having a diameter that is several times greater than the thickness of the platelet. As can be seen in the SE micrograph of FIG. 2, these platelets include multiple sub-sections that are at distinct angles to each other. This unevenness contributes to the high surface area and low bulk density of the particles.

An adjacent platelet is defined as a platelet that is joined directly to the given platelet on either major side of the given platelet. A platelet is not adjacent if it is joined to the given platelet via only a third platelet. A platelet may be at an angle to a first adjacent platelet on one side and retain a parallel structure with a second adjacent platelet on the opposed side. Many of the platelets in a rGOW structure can remain in a graphite configuration in which they are parallel to each other and remain bound together by van der Waals forces. For example, see stacks s₁ and s₂ in FIG. 1b. Particles of rGOW do not typically have extensive graphitic structures, and different embodiments of rGOW structures may be limited to parallel platelet composite structures containing fewer than 15, fewer than 12, or fewer than 11 adjacent parallel platelets. Reduced graphite oxide worm particles exhibit a structure where any dimension of the particle, such as length or diameter, is greater than the thickness of the sum of all the graphene platelets that comprise the particle. For example, if the thickness of a single graphene platelet is about 1 nm, then an rGOW particle comprising 1,000 platelets would be greater than 1 micron in both length and diameter. These three-dimensional particles also have a dimension of at least 50 nm along each of the x, y and z axes as measured through at least one origin in the particle. An rGOW particle is not a planar structure and has a morphology that distinguishes it from both graphite (stacks of graphene platelets) and individual graphene sheets. It is notable however, that rGOW particles can be exfoliated into single platelets, or stacks of platelets, and that these platelets can have at least one dimension that is less than 5, less than 10, less than 50 or less than 100 nm. After an rGOW particle has been exfoliated, the resulting single platelets or stacks of parallel platelets are no longer rGOW particles.

The rGOW particles described herein can comprise a plurality of graphene platelets and in various embodiments may include greater than 10, greater than 100 or greater than 1000 graphene platelets. In various embodiments, the particles may be linear or serpentine, can take roughly spherical shapes, and in some cases may be cylindrical. The structure of an rGOW particle can be described as accordion-like because of the way the particle expands longitudinally due to the alternating edges at which the platelets remain joined. For example, as shown in FIG. 1b, at least some of the adjacent graphene planes are not parallel and are at angles to each other (e.g., angle α in FIG. 1b), for example, at about 25°. Various embodiments may include one or more pairs of adjacent graphene platelets that are joined at angles of, for example, 10°, 25°, 35°, 45°, 60° or 90°. Different adjoining pairs of graphene platelets may remain joined at different edges or points, so the graphene platelets are not necessarily canted in the same direction. If the adjacent graphene platelets remain attached randomly to each other at platelet edges after expansion, the particle will extend in a substantially longitudinal direction. These elongated, expanded, worm-like structures can have an aspect ratio that can be greater than 1:1, greater than 2:1, greater than 3:1, greater than 5:1 or greater than 10:1. The longer axis, or length, of an rGOW particle is the longest line that passes through a central longitudinal core of the particle from one end to the other. See FIG. 2. This line may be curved or linear, or have portions that are curved or linear, depending on the specific particle. The line runs substantially normal to the average c-plane of the platelets in any particular portion along the line. The shorter axis, or width, of the particle is deemed to be the diameter of the smallest circle that can fit around the particle at its midpoint. See FIG. 2. In various embodiments, the length of an rGOW particle can be greater than 1.0 µm, greater than 2.0 µm, greater than 5.0 µm, greater than 10 µm or greater than 100 µm. In the same and other embodiments, the width (diameter of the circle shown in FIG. 2) can be, for example, less than 100 µm, less than 50 µm, less than 20 µm, less than 10 µm, less than 5 µm or less than 2 µm. Specific diameter ranges include: greater than 50 nm, greater than 100 nm, greater than 1 µm, greater than 10 µm, greater than 100 µm, 100 nm to 100 µm, 500 nm to 100 µm, 500 nm to 50 µm, 2.0 µm to 30 µm, 2.0 µm to 20 µm, 2.0 µm to 15 µm, 2.0 µm to 10 µm, 1.0 µm to 5 µm, 100 nm to 5 µm, 100 nm to 2 µm, 100 nm to 1 µm, less than 200 µm, less than 100 µm or less than 10 µm. The width of an rGOW particle along its length need not be constant and can vary by a factor of greater than 2X, greater than 3X or greater than 4X.

An rGOW particle may contain carbon, oxygen and hydrogen and may be essentially void of other elements. A particle is essentially void of an element if the element is absent or is present only as an impurity. In specific embodiments, an rGOW particle can comprise greater than 80%, greater than 90%, greater than 95% or greater than 99% carbon by weight. Some particles may include oxygen, and particularly covalently bound oxygen, at concentrations by weight of greater than 0.1%, greater than 0.5%, greater than 1.0%, greater than 5.0%, greater than 10.0%, greater than 14.0%, less than 25%, less than 15%, less than 10%, less than 5.0%, less than 3%, less than 2% or less than 1.0%. Hydrogen content may be greater than 0.1% or greater than 1% by weight. In the same and other embodiments, hydrogen content may be less than 1%, less than 0.1% or less than 0.01% by weight. In some embodiments, heteroatoms such as nitrogen or sulfur may be present at greater than 0.01% or greater than 0.1% by weight.

Reduced graphite oxide worm particles can exhibit a low density. For example, in various embodiments the particles may have a bulk density of less than 100 g/L, less than 50 g/L, less than 30 g/L, less than 20 g/L, less than 10 g/L, less than 5 g/L, greater than 5 g/L, greater than 10g/L or greater than 15 g/L when measured using ASTM D7481 - 09. These particles may also exhibit high surface area and in some embodiments, can have BET (Brunauer, Emmett and Teller, ASTM D6556-04) surface areas of greater than 200 m²/g, greater than 300 m²/g, greater than 400 m²/g, greater than 500 m²/g, greater than 600 m²/g, greater than 700 m²/g, greater than 900 m²/g or greater than 1000 m²/g. The rGOW particles may also exhibit high structure, and when measured using oil absorption number (OAN) can exhibit structures of greater than 500 mL/100 g, greater than 1000 mL/100 g, greater than 1500 mL per 100 g or greater than 2000 mL per 100 g.

One indicator of the oxygen content in a reduced graphene oxide particle is the volatile material content of the particle. In various embodiments, the rGOW particles can have a volatile content by thermogravimetric analysis (TGA), from 125°C to 1000°C under inert gas, of greater than 1%, greater than 1.5%, greater than 2.0%, greater than 2.5%, greater than 5%, greater than 10%, greater than 15% or greater than 20%. In the same and other embodiments, the volatile content by the same technique can be less than 30%, less than 25%, less than 20%, less than 15%, less than 10%, less than 5%, less than 3% or less than 2%.

The oxygen content of the rGOW particles, when compared to the parent graphite oxide, can be reduced by greater than 25%, greater than 50% or greater than 75%. Similarly, the energetic content of the particles upon thermal decomposition (as measured by DSC) can be reduced by, for example, greater than 25%, greater than 50% or greater than 75%. The decomposition energy of the rGOW particles can be, for example, less than 150 J/g, less than 100 J/g, less than 50 J/g or less than 20 J/g.

The graphitic structure of an rGOW particle can be investigated by Raman spectroscopy. Pure graphite has a Raman spectrum with a strong G band (1580 cm⁻¹) and non-existent D band (1350 cm⁻¹). Graphite oxide exhibits a strong D band as well as G band. Reduced graphite oxide and rGOW particles have a strong D band that in many cases is stronger than the G band (FWHM). In some embodiments, the ratio of the D band to G band may be greater than 1.0, greater than 1.1 or greater than 1.2.

Particles of rGOW can often be differentiated from graphite and similar materials due to differences in crystallinity. Crystallinity of rGOW particles can be determined by Raman spectroscopy and in various embodiments the rGOW particles can exhibit crystallinity values of less than 40%, less than 30% or less than 20%. X-ray diffraction can also be helpful in differentiating between graphite and materials such as graphite oxide and rGOW particles that exhibit different interlayer spacing than does graphite. Graphite has a strong XRD peak between 25° and 30°, however rGOW particles typically have no discernible peak in this range. For example, between 25° and 30°, rGOW particles may have an undetectable peak or a peak that is less than 10% or less than 5% of that of graphite particles.

### Graphite Oxide Production -

As outlined above, one aspect of the disclosure is directed to the production of graphite oxide from graphite. One set of embodiments includes combining graphite particles with a mixture of mineral acids such as nitric acid and sulfuric acid. This mixture is then reacted with a strong oxidizer such as chlorate ion, which can be provided via an aqueous chlorate salt solution. The chlorate may be added to the reaction vessel at a constant rate. After a pre-determined amount of chlorate has been added, the system is allowed to purge for an extended period to complete the oxidation reaction and allow the resulting chlorine dioxide to vent from the reaction mixture. The resulting graphite oxide slurry can then be neutralized and/or concentrated, for example by using the methods described herein.

The starting material graphite particles may be in any form such as powder, granules or flakes. Suitable graphite can be obtained from any available source, and in some cases natural graphite from Superior Graphite has been found to provide acceptable results. Other providers of graphite include Alfa Aesar and Asbury Carbons. In some embodiments, graphite particles may have a D₉₀ of less than 100 µm.

The acid solution that is to be combined with the graphite can be a mixture of mineral acids such as nitric and sulfuric acid. The graphite, nitric acid and sulfuric acid may be combined in any order, but in many embodiments the graphite is added after the nitric acid has been mixed with the sulfuric acid. Although other concentrations can be used, unless otherwise stated, the embodiments described herein use 68-70 % nitric acid and 96-98% sulfuric acid. In various embodiments the weight ratio of nitric acid (on an anhydrous basis, not including the weight attributable to the water content) to sulfuric acid can be, for example, between 0.2 and 0.4, between 0.25 and 0.35 or between 0.26 and 0.32.

It has been found that water can inhibit the graphite oxidation process and that reducing the water content relative to the acid content can improve reaction kinetics. This allows for a greater amount of graphite to be oxidized with a fixed amount of acid, or allows for the same amount of graphite to be oxidized with less acid. In various embodiments the ratio of the weight of total acid to graphite can be less than 15:1, less than 20:1, less than 30:1, or less than 40:1. Specific ranges include between 10:1 and 20:1 , between 10:1 and 30:1, and between 15:1 and 25:1. In the same and other embodiments, the weight ratio of total water to graphite can be less than 10.0:1, less than 9.0:1, less than 8.0:1, less than 7.0:1 or less than 6.0:1. One way of obtaining a lower acid to graphite ratio is to lower the total water to acid ratio. As used herein, "total water" is the sum of all sources of water that enter the reaction vessel, including water from the aqueous chlorate solution and water from the nitric acid. The water to acid ratio is the total water compared to the total amount of acid added, on an anhydrous basis. It is calculated at the time that all of the aqueous chlorate solution has been added and the process is transitioning from the oxidation phase to the purge phase. In various embodiments, the total water to acid ratio is less than 0.43:1, less than 0.40:1, less than 0.35:1, less than 0.30:1 or less than or equal to 0.26:1.

After the nitric acid, sulfuric acid and graphite have been placed in the reaction vessel, chlorate addition is started. Chlorate ion (ClO₃⁻) can be delivered as an aqueous solution of a chlorate salt or as a dry powder. Chlorate salts may be selected from those including an ammonium or alkali metal cation, such as potassium or sodium chlorate. In various embodiments, the chlorate salt concentration (including the cation) in aqueous solution can be, by weight, greater than or equal to 40%, greater than or equal to 50%, greater than 55% or greater than 60%. The weight ratio of chlorate to water in various embodiments of the chlorate solution can be in the range of 0.8:1 to 2:1, 1:1 to 2:1 or 1:1 to 1.5:1. The total amount of chlorate used is proportional to the amount of graphite being oxidized and the weight ratio of chlorate to graphite can be, for example, between 2:1 and 10:1, between 2:1and 8:1 or between 3:1 and 6:1. In specific embodiments, the weight ratio of chlorate to water in the aqueous chlorate feed is greater than 1:1 and the ratio of chlorate to graphite is greater than 3:1. Chlorate may be provided to the reaction mixture at a constant or varied rate during the course of the reaction. In some embodiments, it is provided at a constant rate of between 1 and 3 or between 1.5 and 2.5 grams of chlorate per hour per gram of graphite.

In some embodiments, a flow of gas, such as from a sparger, can be used to agitate the reaction mixture and/or aid in the removal of chlorine dioxide (ClO₂) from the system. Appropriate gases and gas mixtures include nitrogen and air. Chlorine dioxide is both toxic and reactive. To help retain the concentration of chlorine dioxide at safe levels in the reaction mixture and in the headspace above, a constant flow of gas, such as nitrogen or air, can serve as a diluent to keep the chlorine dioxide below unsafe levels. The sparger gas flow can serve to carry the chlorine dioxide gas to a trap for safe destruction or disposal of the chlorine dioxide. In some embodiments, a flow of gas through the reaction medium can also accelerate the removal of chlorine dioxide from the medium, removing a product of reaction and thus accelerating the oxidation process. In some cases, a gas flow such as in a bubble column reactor can be used in the absence of any other agitation, such as stirring or shaking.

In some embodiments, a flow of gas, such as from a sparger, can be used to agitate the reaction mixture and/or aid in the removal of chlorine dioxide from the system. Appropriate gases and gas mixtures include nitrogen and air. Chlorine dioxide is both toxic and reactive. If the level of chlorine dioxide in the reaction medium reaches saturation, pure chlorine dioxide bubbles can develop with the potential to explosively decompose. To help retain the concentration of chlorine dioxide at safe levels in the reaction mixture and in the headspace above, a constant flow of gas, such as nitrogen or air, can serve as a diluent to keep the chlorine dioxide below unsafe levels. After exiting the headspace area, the chlorine dioxide can be trapped and disposed of safely. In some cases, the gas flow can also be accompanied by stirring.

In instances where the reaction medium is agitated, by stirring for example, chlorine dioxide can be removed by sweeping the headspace of the reaction vessel. The lower explosive limit (LEL) of chlorine dioxide is 10% by volume, so the target limit for chlorine dioxide levels in the headspace is typically below this level. Levels can be maintained below 10% by supplying sweeping gas at about 10 times the rate of chlorine dioxide production. If the reaction rate is faster, then the volume of gas should be increased proportionally. The transfer of chlorine dioxide from the liquid medium to the headspace is dependent on the size of the gas/liquid interface. As the volume of a reaction vessel is increased, the ratio of the area of the gas/liquid interface to the volume of reaction medium decreases according to L²/L³, where L is the characteristic length scale of the reaction vessel. As a result, as the size of the reaction vessel increases, the reaction time and purge time need to be increased to provide for the transfer of chlorine dioxide to the headspace. This leads to extended production times that are not tenable in a production scale operation.

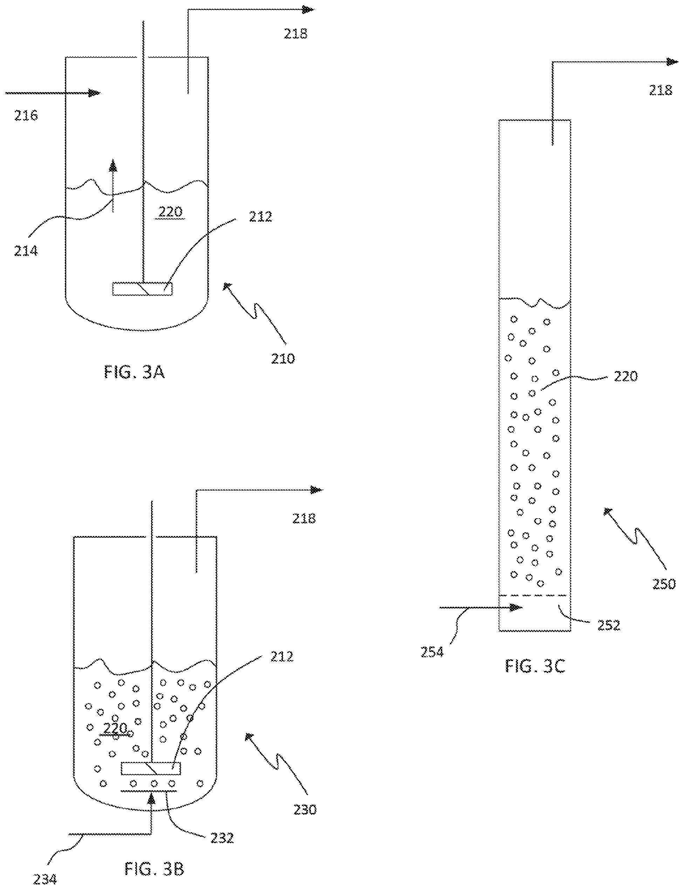

It has been found that gas flow through the reaction medium can be effective at removing chlorine dioxide during the chlorate addition reaction phase, after completion of chlorate addition during the purge phase, or during both phases. Gas flow, such as sparging, is particularly effective for larger, production scale systems because it is not dependent on the size of the surface area and headspace interface. One example of an oxidation system 210 is shown schematically in FIG. 3A. System 210 uses mechanical impeller 212 for agitating the reaction medium 220. Chlorine dioxide gas entering the headspace from reaction medium 220 is represented by arrow 214. Sweeping gas, such as nitrogen, is provided through gas inlet 216. Sweeping gas including chlorine dioxide is removed via gas exit 218 which leads to a trap or vent for disposal or reclamation.

FIG. 3B schematically represents an embodiment of a hybrid reaction system 230. System 230 includes mechanical impeller 212 as in the embodiment of FIG. 3A. However, system 230 also includes sparger 232 that is positioned at the bottom of the reaction vessel and is fed by sparging gas source 234. In the embodiment illustrated, the sparger is a ring with 12 to 16 holes drilled in the top to channel gas bubbles under the impeller 212. The spinning impeller breaks down and disperses the gas bubbles to create a large gas/liquid interface. This large surface area of gas/liquid interface provides for efficient transfer of chlorine dioxide from the liquid to the gaseous phase. The sparging gas then carries chlorine dioxide from the reaction medium 220 into the headspace. The sparging gas can also dilute chlorine dioxide that is present in the headspace. Gas exit 218 provides a pathway for the mixture of sparging gas, water and chlorine dioxide to leave the reaction vessel. One type of system that uses gas flow through the reaction medium for agitation and mass transfer, without relying on mechanical agitation, is a bubble column reactor. A bubble column reactor can include a sparger but does not use a mechanical agitator.

FIG. 3C schematically depicts a bubble column system 250 that relies exclusively on sparging gas for agitation and chlorine dioxide removal. Note that the bubble column of system 250 has a large height to diameter ratio and a low surface interface area to volume ratio. In various embodiments, bubble column reactors can have height to diameter ratios of greater than 5:1, greater than 10:1 or greater than 20:1. They can be made of any material that is resistant to low pH, including glass or PTFE lined steel. As can be seen from FIG. 3C, the residence time of a gas bubble is extended due to the height of the column of reaction medium. One specific embodiment includes a cylindrically shaped reaction vessels having a diameter of 6 inches and a height of 40 inches. In this embodiment, this reaction vessel can be charged up to the 25 inch level with graphite and acid, leaving about 15 inches for headspace and the addition of sodium chlorate solution. The headspace of the bubble column reactor provides extra volume for expansion of the liquid phase that occurs as a result of the bubble volume contribution to the liquid reaction medium. The absence of a stirring apparatus can free up space in the vessel and allows for attachment of accessories such as pressure inlets, gas exit vents, probes and pressure relief systems that might be difficult to include with reactor designs that include stirrers or other agitation devices.

Spargers used to provide sparging gas to bubble columns or alternative reaction vessels can be of any design that can provide an adequate supply of small bubbles capable of providing the desired amount of liquid/gas interface. The sparger is in fluid communication with a gas supply, such as nitrogen or air. Spargers can be made of materials that are resistant to the low pH conditions of the graphite oxidation reaction medium. For example, the spargers can be made from nickel alloys, polymers such as PTFE, or glass. Sparger shapes can be selected to maximize the distribution of bubbles across the cross-sectional area of the vessel. In various embodiments, the spargers can take the shape of a ring, a disk, a plate, a sphere, a cylinder or a spoked design where a plurality of perforated arms extend from a central axis. Spargers can include a plurality of holes on either the upper surface, the lower surface, or both. In other embodiments, the sparger can be made from a porous material, such as sintered glass, that does not include readily defined holes or perforations. In some cases, multiple spargers can be used, and each sparger can be controlled independently to allow for tuning of the bubble pattern.

In one set of embodiments, the graphite oxidation process is started by combining the nitric acid and sulfuric acid in the reaction vessel. The graphite is then added to the mixture and agitation is started by sparging the mixture with nitrogen. Sodium chlorate solution is fed to the reaction mixture at a constant rate of about 2 g/hr chlorate per gram of graphite. After the target amount of chlorate has been added, e.g., 5 g per gram of graphite, the addition process is ceased and the purging phase is started. Sparging is continued and the chlorine dioxide concentration in the reaction mixture is monitored. When the chlorine dioxide level drops below a threshold, for instance 1000, 100, 10, 1 or 0.1 ppm by weight, the reaction is deemed complete and the graphite oxide product can be transferred to the concentration and purification stage described below.

In other embodiments, different techniques for transferring chlorine dioxide from the reaction medium to the head space can be used. For example, a vacuum source such as a vacuum pump can be used to reduce the vapor pressure in the head space. The low pressure in the reaction vessel causes bubbles of chlorine dioxide to form in the reaction medium. The chlorine dioxide bubbles rise upward through the liquid into the headspace. A trap or other chlorine dioxide removal device can be positioned between the reaction vessel and the vacuum source. In some cases, gas bubble formation in the reaction medium can also agitate the medium and keep graphite oxide particles suspended in the fluid.

### Concentration and purification -

Graphite oxide produced as provided above can be purified and concentrated using techniques including filtration and centrifugation. It has been found that dead end filtration, such as with a Buchner funnel, is ineffective at purification and concentration of graphite oxide because the resulting filter cake becomes too impermeable for obtaining reasonable wash rates. As an alternative to dead end filtration, various tangential flow filtration techniques were attempted. Tangential flow filtration involves passing a slurry or suspension through a tubular membrane and collecting permeate through pores that pass through the walls of the tubular membrane. Tangential flow membranes can include ceramic tubular membranes as well as hollow fiber polymer membranes such as those made from polysulfone or polyvinylidene difluoride (PVDF). Ceramic membranes typically have flow channels between 3 and 6 mm in diameter while hollow fiber polymer membranes have flow channels of about 0.7 to 1.4 mm in diameter. Tangential flow rates for ceramic membranes are usually about 5 to 10 m/s but are typically lower for polymer membranes and can be, for example, about 1 or 2 m/s. As the graphite oxide slurry has a corrosive pH, ceramic membranes may be preferred over polymer membranes, although polymer membranes may be appropriate for some embodiments. In various embodiments using ceramic membranes, linear flow rates can be less than 7 m/s, less than 5 m/s, less than 4 m/s, less than 3 m/s or less than or equal to 2 m/s. In these and other embodiments, the linear flow rates can be greater than 1 m/s, greater than 2 m/s, greater than 4 m/s or greater than 6 m/s. In some cases, undesirable shear was realized due to the use of a backpressure valve in the recirculation loop that drives the pressure gradient across the membrane. This left a large pressure drop resulting in shear formation at the backpressure valve. This shear inducing problem was solved by eliminating the backpressure valve and enclosing and pressurizing the entire retentate recirculation system, including the headspace above the retentate reservoir. In this manner, a pressure gradient across the filtration membrane can be maintained without the use of the backpressure valve in the recirculation loop. The enclosed system can be limited to pressure differentials of, for example, no more than 15 psi, 10 psi or 5 psi. In some embodiments, shear conditions can be further reduced by limiting the fluid flow path to curves and elbows of less than 90°, for example, 45° or less.

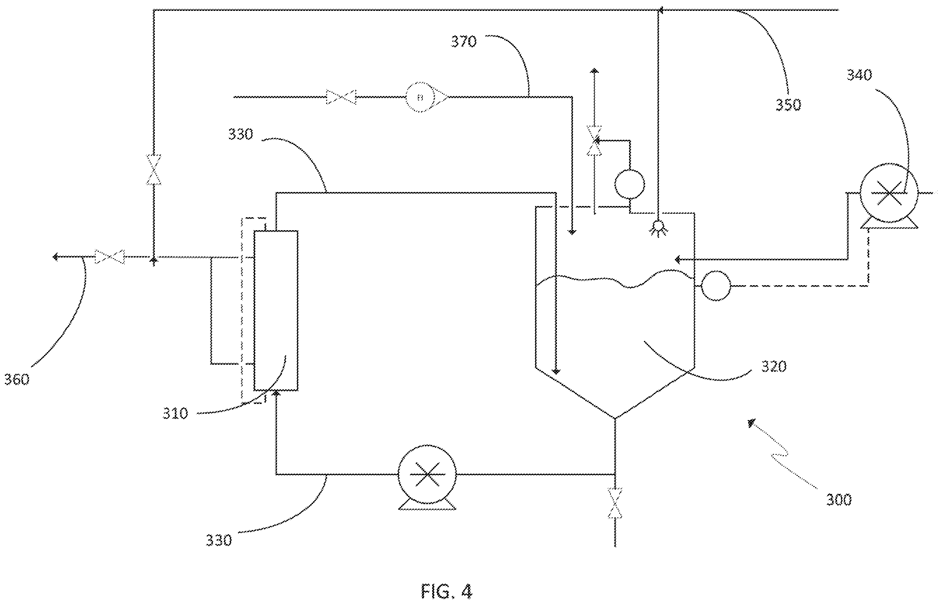

One embodiment of a tangential flow system 300 is illustrated schematically in FIG. 4. Tangential flow membrane 310 can be a tangential flow membrane capable of filtering acidic aqueous suspensions. In one set of embodiments, ceramic membranes from Pall Corporation can be used. For instance, useful membranes may have a pore exclusion size of 0.1, 0.2, 0.65, 0.8 and 1.4 µm and can have a membrane area of greater than 0.1 m², greater than 0.2 m² or greater than 0.5 m². Prior to contacting the filter membrane, 7.5 liters of graphite oxide slurry, produced as described herein, are quenched with from 15 to 60 liters of DI water. The quenched slurry is then pumped from the quench tank to the retentate reservoir 320 using transfer pump 340. Retentate reservoir 320 can be pressurized to, for example, greater than 2, greater than 5, or greater than 8 psi. This allows for the elimination of a backpressure valve that would conventionally be placed between the exit of the membrane 310 and retentate reservoir 320. The quenched slurry is flowed into recirculation loop 330 that includes tangential flow membrane 310. The graphite oxide slurry is diafiltered at a transmembrane pressure of 9 psi until the volume is reduced to about 5 liters. This volume is then washed with 20 to 30 liters of DI water by continuing diafiltration and adding water via DI water conduit 350 to retentate reservoir 320 at the same rate at which the permeate is lost through permeate drain 360. Pressure is maintained in retentate tank 320 by pressurizing the headspace in the tank with pressurized gas source 370. The diafiltration process continues until impurities such as sulfate, nitrate and chlorate are reduced to acceptable levels, for example, <1000 ppm sulfate or <300 ppm nitrate. These levels can be confirmed using, for example, ion chromatography, or can be monitored in line using conductivity detectors. If impurities are not reduced to acceptable levels, additional water can be added to retentate reservoir 320, and diafiltration can continue until the desired levels are reached. Once these levels are obtained, the filtration process is continued without water replenishment until the graphite oxide particles are concentrated to between 7.5 and 15% by weight in water. This concentrated slurry is then drained and is ready for high temperature spray drying and reduction as described below. The resulting rGOW particles exhibited good morphology with a BET surface area of greater than 600 m²/g. The particles were analyzed for metal content by ICP and were found to contain on average, by weight, < 30 ppm Fe, < 20 ppm K, < 1000 ppm Na, less than 20 ppm Si, less than 20 ppm Ti and less than 5 ppm (below the detection limit) of each of Ag, Al, As, B, Ba, Ca, Co, Cr, Cu, Mg, Mn, Mo, Ni, Pb, Pt, Sb, Te, Tl, V, W, Zn and Zr.

### High Temperature Spray Drying and Chemical Reduction -

Graphite oxide can be reduced by removing some or all of the bound oxygen groups from the graphite oxide. This process can also result in high inter-graphene platelet pressure that expands the graphite oxide to produce rGOW particles. This is different from some known reduction processes whereby individual graphene oxide sheets are exfoliated from a graphite oxide particle and subsequently reduced in a separate step. For example, in one known process, graphite oxide can be exfoliated in dilute solution and then chemically reduced or thermally reduced using, for example, a spray reduction process.

It is known to produce reduced graphite oxide from graphite oxide particles by shock heating dried graphite oxide particles in a furnace at 500-1000°C. This is a two-step process in which the graphite oxide particles are first dried and then separately thermally reduced. As explained below, this two-step process includes procedures that can result in significant safety hazards. The one step process described herein reduces or eliminates the safety hazards and also reduces the total number of procedures required in order to reduce a graphite oxide particle.

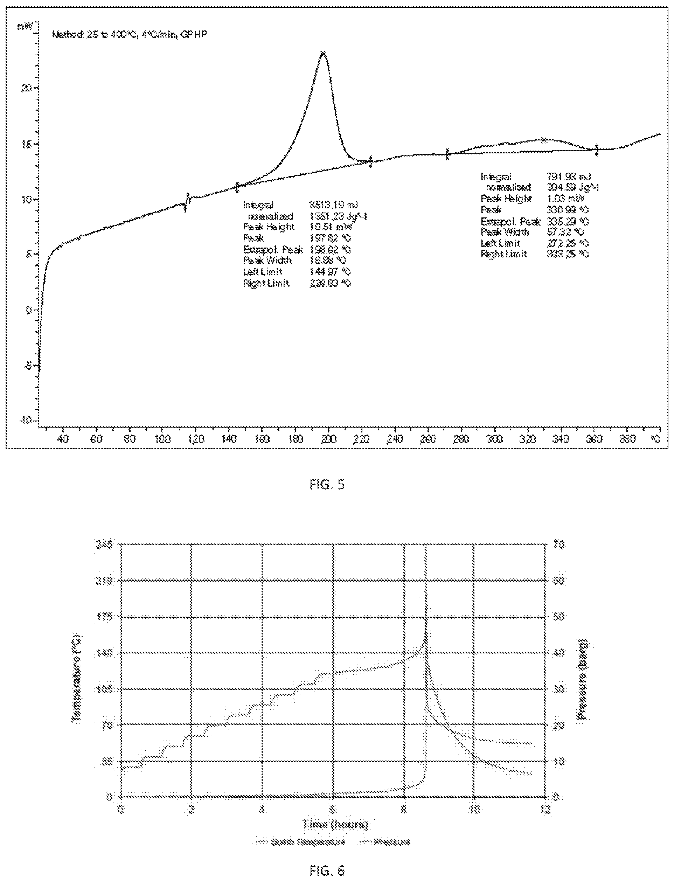

The conventional two-step process begins with drying the graphite oxide particles by removing the water from a slurry of graphite oxide and water. The graphite oxide particles can be dried using a conventional spray dryer at a temperature above 100°C. These dried graphite oxide particles can then be reduced, either thermally or chemically. For example, the oxygen content of the sample can be reduced by heating it to a temperature of between 500 and 1000°C. However, as shown in the differential scanning calorimetry (DSC) scan of FIG. 5, a significant exothermic decomposition event starts to occur at about 144°C. The same event is shown via accelerated rate calorimetry (ARC) scan in FIG. 6 that indicates that the instrument was forced into auto-shutdown due to exceeding the pre-programmed trip value of 1000 °K/min. This exothermic decomposition is rapid and significant, releasing decomposition energy of about 1700 J/g. Even for very small quantities, such a sudden release of this amount of energy can be explosive. This exothermic event is a disproportionation reaction, not an oxidation reaction, and therefore cannot be prevented by using an inert atmosphere. It is notable that this exothermic reaction could occur either during the drying process, the thermal reduction process, or both.

In another type of reduction process, slurried graphite oxide particles are first exfoliated to form a suspension of individual platelets of graphene oxide. This can be done in solution using, for example, ultrasound or chemical techniques. The resulting graphene oxide slurry can be subsequently spray dried, but the spray dry process may be limited to concentrations of about 1% by weight due to unacceptable viscosity and flow capability at higher concentrations.

As described herein, a high temperature spray drying and reduction process has been developed that allows for simultaneously drying and thermally reducing the graphite oxide particles to rGOW particles. In contrast to individual reduced graphene oxide sheets, rGOW particles include a plurality of reduced graphene oxide sheets that are joined together, but in which at least some of the reduced graphene oxide sheets are positioned in non-parallel planes. By spraying a high concentration graphite oxide slurry into a high temperature environment, e.g., greater than 300°C, the particles can be dried and reduced in a period of time less than, for example, one second. In certain embodiments, the residence time in the high temperature zone can be from 0.5 to 5 seconds. The particles are exposed instantly to a temperature that exceeds the accelerated decomposition temperature threshold. Any additional energy released into the system by the decomposition reaction can be retained in the system and provides additional energy for maintaining temperature and for vaporizing the water fraction from the graphite oxide particles. A controlled, continuous feed of slurry into the high temperature environment allows the exotherm to be controlled and exploited, in contrast to the batch heating of dried graphite oxide with its associated safety hazards. An apparatus for high temperature drying, decomposition and reduction is described below, along with a method embodiment of using the apparatus to prepare rGOW particles.

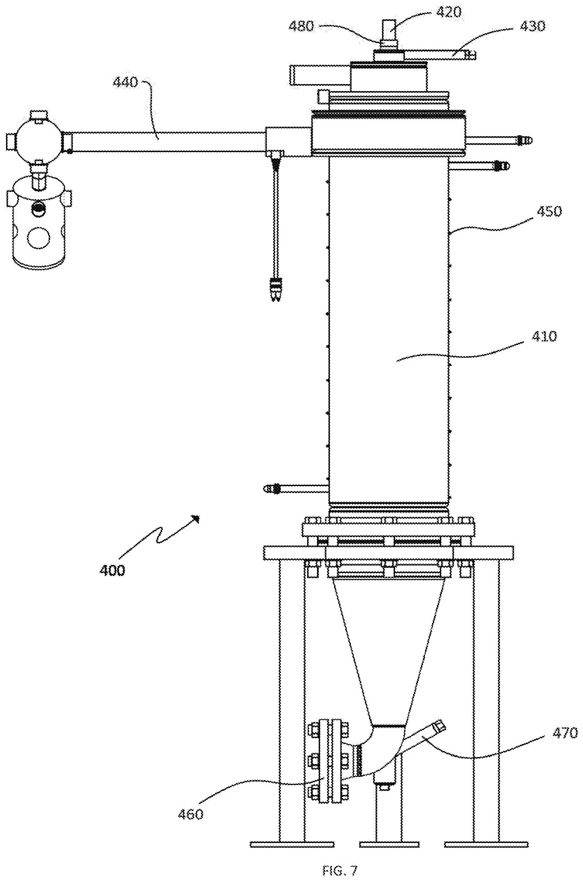

One embodiment of a high temperature spray drying and thermal reduction system 400 is shown in cross-section in FIG. 7. High temperature chamber 410 is in fluid communication with spray nozzle 420 and electrical gas heater 440. High temperature chamber 410 can be electrically heated, such as by resistance coils that are held in place around the chamber by clips 450. Dry, reduced graphite oxide particles can be collected at outlet 460. Reduced particles can be cooled using cooling gas received via cooling gas inlet 470.

High temperature chamber 410 can be cylindrically shaped and is sized based on the desired rate of production. Spray nozzle 420 is constructed and arranged to provide graphite to the interior of the high temperature chamber 410. Nozzle 420 can be liquid cooled and can provide an atomized spray of a graphite oxide slurry to chamber 410. The slurry can comprise a suspension of graphite oxide particles in water and the graphite oxide particles can have an average size, for example, of between 5 and 50 µm, and may fall into a size range having a D₉₀ of less than 100, less than 50, less than 35 or less than 10 µm. Spray nozzle 420 can provide an atomized flow of from about 300 to 1000 mL per hour of a slurry containing between 7.5% and 15% graphite oxide by weight. Additional nozzle configurations can provide increased flow rates for larger systems and multiple nozzles may be used with a single high temperature chamber.

Conditions for operating one set of embodiments with the apparatus of FIG. 7 are provided below in Table 1.

**Table 1**

| | |
|---|---|
| Slurry pumping rate to spray dryer | 300-900 ml/hr |
| Spray Dry Vessel temp | 700-730 °C |
| Drying gas temp and flow rate | 900 °C at 100-200 slpm |
| Atomizing gas flow rate | 12-30 slpm |

As detailed above, rGOW particles can exhibit useful properties such as high surface area and low density. The multiple steps involved with producing rGOW particles such as oxidation, purification, concentration, drying and reduction can all affect the properties of the final rGOW particles. The following experiments were run to determine the most critical parameters in producing consistent rGOW particles with specific properties.

### Examples

### Water to acid ratio -

To minimize costs and reaction times, it is desirable to run the oxidation reaction with as high a graphite to acid ratio as possible while still obtaining rGOW particles that have a high BET surface area, for example, greater than 600 m²/g. It has been found that the use of less water, and particularly a lower water to acid ratio, provides for efficient reaction times with a minimal amount of reagents while retaining good rGOW particle structure. During the graphite oxidation process described in detail herein, the primary sources of water in the reaction are nitric acid and aqueous chlorate solution. Any reduction in water concentration in the reaction therefore involves either a reduction in the amount of these reagents used or an increase in concentration of each of the reagents. As fuming nitric acid is expensive and dangerous, 68-70 % nitric acid is the most concentrated form of nitric acid that is practical for the oxidation reaction, and this results in the addition of about 30 grams of water for every 70 grams of nitric acid that is added to the reaction. Given that this source of water is, in practice, unavoidable, three pathways of decreasing the total amount of water used are available. These are: reducing the amount of nitric acid used; reducing the amount of chlorate solution used; or increasing the concentration of chlorate in the aqueous chlorate feed.

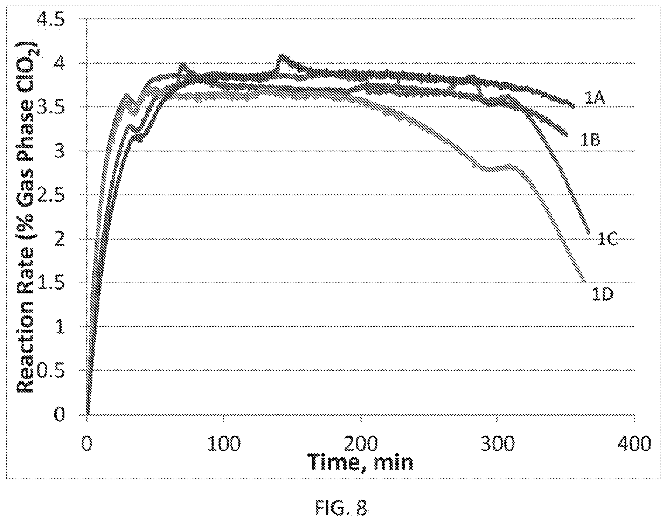

Table 2 and FIG. 8 provide data from Experiment 1 in which graphite was oxidized, purified, and spray dried/reduced to make reduced graphite oxide worm (rGOW) particles. As detailed in Table 2, quantities and concentrations of reagents were varied to determine the effect of these changes on the reaction kinetics and the length of the purging process. The reaction was deemed to provide acceptable rGOW particles when the reaction had run to completion and the BET of the rGOW particle was greater than 600 m²/g. Unless otherwise stated, procedures were carried out as described above. The graphite starting material was graphite powder from Superior Graphite. Chlorate was added at a constant rate over a 6 hour period. The temperature of the reaction vessel was maintained at 22°C. The reaction vessel was stirred at a rate of 250 rpm and was sparged at a rate of 10 slpm. The same sparge rate was continued through the purge phase of the process.

The first column of Table 2 provides the identifying reaction number. The second column provides the amount of graphite used. The third column provides the amount of nitric acid used, on an anhydrous basis. Column 4 provides the amount of sulfuric acid used. Column 5 provides the weight ratio of sodium chlorate to graphite. Column 6 provides the sodium chlorate concentration in the sodium chlorate feed solution. Column 7 provides the total amount of sodium chlorate added to the reaction. Column 8 provides the weight ratio of graphite to acid. Column 9 provides the amount of water contributed to the reaction by the nitric acid. Column 10 provides the amount of water contributed to the reaction by the sodium chlorate solution. Column 11 provides the total amount of water added to the reaction, and column 12 provides the weight ratio of the total water to acid in the reaction. The reactions were carried out to completion allowing the gas phase ClO₂ concentration to drop below 100 ppm at the end of the purge phase. The rGOW particles were produced by purifying and concentrating the graphite oxide particles using the tangential filtration technique described above. The graphite oxide slurry was then simultaneously spray dried and reduced using the spray dry/reduction method described above, with specific conditions provided above in Table 1. The resulting rGOW particles exhibited good morphology with a BET surface area of greater than 600 m²/g.

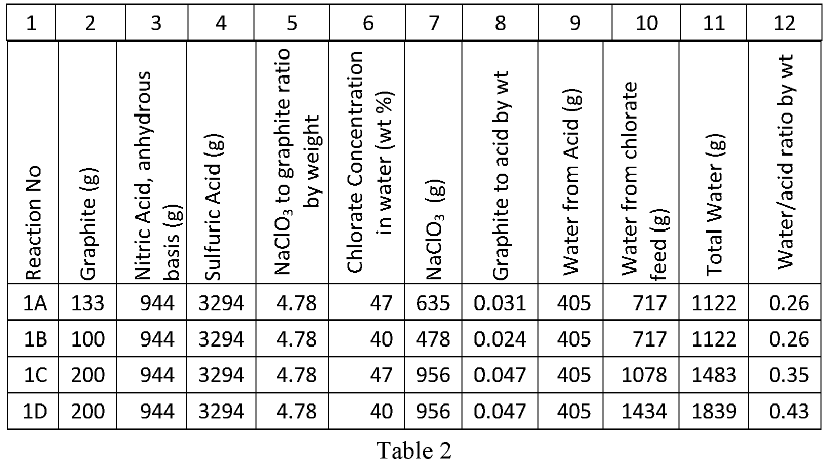

Results showing reaction rate (chlorine dioxide production) over time are provided in FIG. 8. The results indicate that a lower water/acid ratio results in a faster process, including both oxidation and purge phases. Samples 1C and 1D show a steep decline in reaction kinetics during the oxidation phase. This decline in reaction kinetics occurs while the chlorate addition continues at a constant rate, meaning that there is an accumulation of unreacted chlorate in solution towards the end of the reaction. The accumulated chlorate and slower reaction kinetics at the end of the reaction result in a longer purge phase, since this residual chlorate must react during the purge phase if the reaction is to go to completion. This decline is absent in Samples 1A and 1B that both have water to acid ratios of 0.26, significantly lower than the water to acid ratios of Samples 1C and 1D. FIG. 8 also shows that the kinetics are essentially maintained when the graphite to acid ratio is increased (33% higher in 1A than in 1B) as long as the water to acid ratio is kept low (0.26 for both Samples 1A and 1B). Samples 1C and 1D included higher graphite to acid ratios but were less efficiently oxidized because of the higher water to acid ratio.

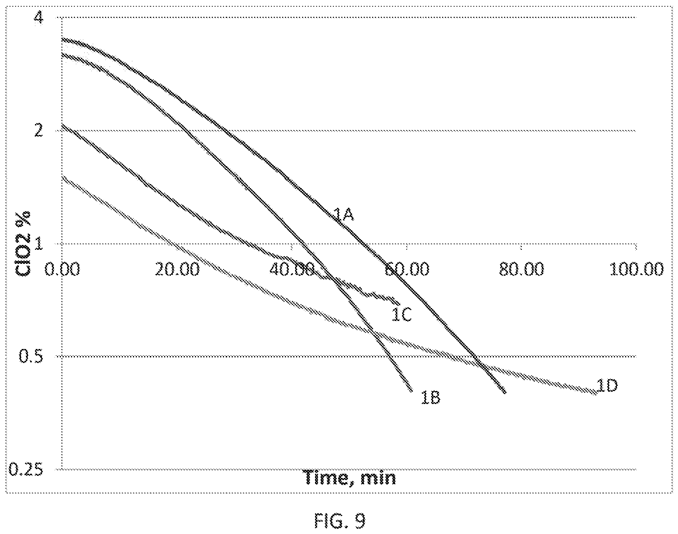

Results for these samples also show that the purge phase is significantly shortened for the samples having the lower (0.26) water to acid ratio. FIG. 9 plots the concentration of gaseous chlorine dioxide in the headspace over time for the purge phase of the reaction. The purge phase begins after all of the sodium chlorate has been added and ends when the concentration of chlorine dioxide in the headspace drops below about 100 ppm chlorine dioxide. The plot lines for the reactions with lower water to acid ratios (1A and 1B) show an increase in chlorine dioxide purge rate while those with higher water to acid ratios (reactions 1C and 1D) have a decreasing chlorine dioxide purge rate. Note that FIG. 9 only includes measurements down to 4000 ppm and that the illustrated trends continue (using different measurement techniques) as the chlorine dioxide concentration is reduced to the end point of, for example, 100 ppm, greatly lengthening the difference in purge time between the low water to acid samples (1A and 1B) and the high water to acid samples (1C and 1D). For example, the 100 ppm end point for examples 1A and 1B was achieved in less than 4 hours, while reactions 1C and 1D required more than 12 hours to reach the same level. The purge trajectories for samples 1A and 1B are similar, indicating that greater amounts of graphite (1A) can be efficiently oxidized under similar reaction conditions as long as the water to acid ratio is maintained at a low level, e.g., less than or equal to 0.26. The extended purge times for samples 1C and 1D show that an increase in the amount of graphite being oxidized is inefficient when the water to acid ratio is not maintained at a low level.

### Bubble Column Reactor -

A series of experiments were run to determine if the bubble column reactor could: i) remove chlorine dioxide at a rate to enable 6 hour reaction times and 3 hour purge times, and ii) agitate and suspend the graphite particles in a manner that is consistent enough to produce homogeneous, evenly oxidized particles.

In another experiment, a bubble column system was compared to a mechanically agitated system through both the reaction and purging processes. Each process was deemed to be successful based on the characteristics of the rGOW particles that were produced by each procedure. Specifically, rGOW particles were evaluated based on BET surface area and weight loss via TGA. Each process used the identical graphite starting material. Both Process 1 and Process 2 both used sparging gas for the reaction phase and the purge phase. The vessel used for each process was a 10 liter glass vessel. Other materials of construction can include, for example, PTFE lined steel, poly (vinylidene fluoride) PFDF, CPVC and titanium. The difference between the two processes was that Process 1 also used a mechanical impeller operating at 250 rpm for the duration of the reaction and purge phases. Process 2 relied exclusively on the sparger for agitation and chlorine dioxide removal. Types and quantities of reactants were the same as those described for sample 1B in Table 2. In each of Processes 1 and 2, nitrogen was fed through the sparger at a rate of 10 slpm throughout the reaction and purge phases. Process 2 relied exclusively on the sparging process described for System 2 in experiment 1, above, except that the process was applied to the reaction phase as well as the purge phase. In all cases, the reaction and purge phases (residual ClO₂ < 100 ppm) were completed in less than 10 hours. The graphite oxide produced from each process was washed and concentrated using the tangential filtration apparatus of FIG. 4. Subsequently, the concentrated graphite oxide slurry from each process was spray dried and reduced using the conditions provided in Table 1. Properties from the finished rGOW particles are provided in Table 3 below. Each process was run multiple times and the values provided are averages of 14 runs for Process 1 and 11 runs for Process 2. Results indicate that the surface area and oxygen content of the rGOW particles produced by each method are similar, with Process 2 (bubble column sparging only) producing particles of slightly greater surface area and oxygen content.

**Table 3**

| Process ID | BET Surface Area m²/g | Surface area std deviation m²/g | % Weight loss 125-1000°C by TGA | Weight loss standard deviation |
|---|---|---|---|---|
| Process 1 (sparging and impeller) | 700 | 34 | 16.17 | 0.76% |
| Process 2 (sparging only) | 713 | 21 | 16.33 | 0.25 % |

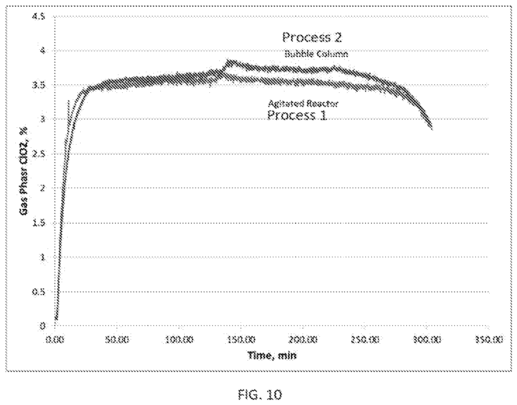

To assess the total reaction efficiency of a bubble column (sparging) process compared to a mechanically agitated process, Process 1 and Process 2 were repeated and chlorine dioxide levels were monitored during both the reaction and purge phases. The reaction vessel had a volume of 10 liters. As described above, during the reaction phase, chlorine dioxide production is indicative of the amount of oxidation that the graphite particle is undergoing. The graph of FIG. 10 shows the chlorine dioxide levels for a six-hour period (reaction or oxidation phase) over which sodium chlorate was added at a constant rate. The closely tracking plots of FIG. 10 indicate that oxidation takes place at a similar rate when the process relies exclusively on sparging or when the process includes agitation by a mechanical impeller. FIG. 9 provides an analogous plot for the purge phase for each process. As illustrated in the figure, the agitator function of Process 1 reduces the level of chlorine dioxide to 50 ppm in about 60 minutes while the bubble column of Process 2 takes about 90 minutes to reach the same level.

While running Process 2 as described above, it was observed that there was no settling, clumping or segregation of graphite or graphite oxide particles during the reaction and purge phases. This level of mixing is important to assure equal oxidation of graphite particles during the process. Consistent mixing and suspension of particles is also evidenced by the data in Table 3 that indicates equivalent levels of graphite oxidation within and across different batches.

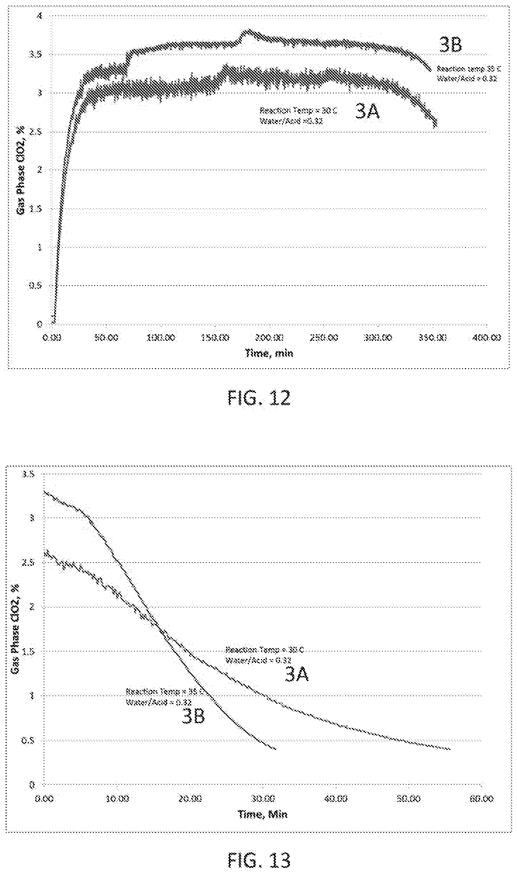

In another set of experiments, the temperature of the reaction medium was varied and the oxidation rate monitored. Specifically, the oxidation and purge processes as described above were carried out at 30°C and 35°C. The graphite to acid ratio for each of reactions 3A and 3B was 0.046. The reaction conditions are reagent quantities are provided below in Table 4. FIG. 12 provides a plot for chlorine dioxide production during the oxidation phase for each of reactions 3A and 3B. Reaction 3B, at a temperature of 35°C, shows improved reaction kinetics when compared to reaction 3A at 30°C. This difference is more readily apparent in FIG. 13 that illustrates a purge down to 4000 ppm of chlorine dioxide in about 32 minutes for reaction 3B and about 57 minutes for reaction 3A. Note that the graphite to acid ratio for reactions 3A and 3B is similar to that for reactions 1C and 1D, above, but that the reaction kinetics for 3A and 3B are both superior to those of reactions 1C and 1D. This is believed to be the result of higher reaction temperatures as well as slightly lower water to acid ratios than used in examples 1C and 1D.

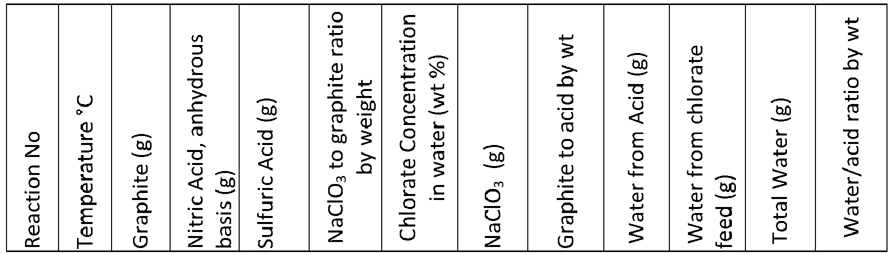

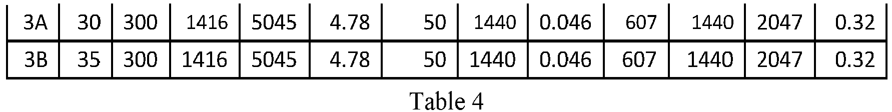

### Spray Dry Flow Rates and Temperature -

In one set of experiments, graphite oxide was simultaneously dried and reduced at different temperatures to evaluate the properties of the resulting reduced graphite oxide particles. The high temperature chamber of FIG. 7 was operated at temperatures of 360°C, 550°C and 720°C. The resulting reduced graphite oxide particles were evaluated for surface area, energy content and weight loss by TGA over the temperature range of 105°C to 500°C. The graphite oxide slurry was pumped through the nozzle at a rate of 300 mL/hr, the drying gas was supplied at 100 slpm, and the atomizing gas at 12 slpm. Temperature conditions and measured particle properties are provided in Table 5 and indicate that higher temperatures result in higher surface areas and reduced oxygen content.

**Table 5**

| Sample ID | Chamber Temp °C | BET SA (m²/g) | Decomposition Energy Content by DSC (J/g) | TGA weight loss % |
|---|---|---|---|---|
| A | 360 | 79.2 | 108 | 9.99 |
| B | 550 | 529 | 12 | 3.72 |
| C | 720 | 715 | 0 | 3.26 |

### Process flow -

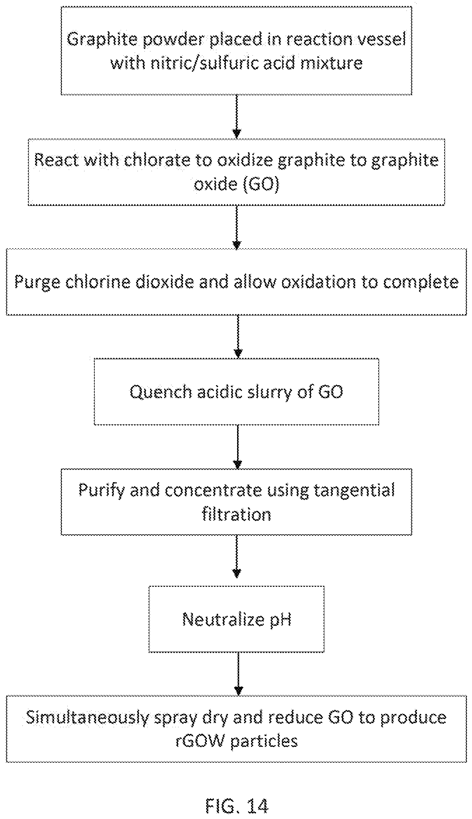

A flow chart illustrating one embodiment of the production of rGOW particles from graphite is provided in FIG. 14. Graphite particles are placed in mixture of nitric acid and sulfuric acid and sparging is started. A supply of chlorate is provided to the graphite reaction mixture to oxidize the graphite to graphite oxide (GO). The reaction is allowed to run to completion during a purging phase in which sparging is continued to remove chlorine dioxide gas. The resulting slurry of GO is at a very low pH (less than .5) and is subsequently quenched with DI water. The quenched slurry is pumped to a tangential filtration system where it is purified and concentrated. The concentrated slurry is further neutralized by the addition of a base. The neutralized slurry is then fed to a high temperature spray dryer where it is simultaneously dried and chemically reduced to produce rGOW particles.

The foregoing description of the embodiments of the invention has been presented for the purposes of illustration and description. It is not intended to be exhaustive or to limit the invention to the precise form disclosed. Many modifications and variations are possible in light of this disclosure. It is intended that the scope of the invention be limited not by this detailed description, but rather by the claims appended hereto.

## Claims

1. A method of oxidizing graphite to produce graphite oxide, the method comprising:
combining graphite, nitric acid and sulfuric acid to form a graphite mixture;
feeding a chlorate solution into the graphite mixture;
sparging the graphite mixture while feeding the chlorate solution into the graphite mixture; and
ceasing the chlorate feed when the total amount of chlorate added reaches the range of 2.5 to 6.0 g chlorate per gram of graphite, wherein the total water to acid ratio is less than 0.43:1, less than 0.40:1, less than 0.35:1, less than 0.30:1 or less than or equal to 0.26:1.

2. The method of claim 1 wherein sparging is continued after ceasing the chlorate feed and until a chlorine dioxide level in a headspace above the graphite mixture drops below 1000, 500 or 100 ppm.

3. The method of claim 1 or 2 wherein a ratio of the total amount of water added to the total amount of anhydrous acid added, by weight, is less than 0.33:1, less than 0.30:1 or less than 0.27:1.

4. The method of any of claims 1-3 wherein the chlorate solution has a chlorate to water ratio, by weight, of between 1:1 and 2:1.

5. The method of any of claims 1-4 further comprising sparging a gas or gas mixture through the graphite mixture after ceasing the chlorate feed.

6. The method of any of claims 1-5 wherein the ratio of nitric acid to sulfuric acid, by weight, is in the range of 0.25:1 to 0.35:1 on an anhydrous basis.

7. The method of any of claims 1-6 wherein the mixture is agitated by sparging purge gas through the mixture during the feeding of the chlorate solution.

8. The method of any of claims 1-7 wherein the mixture is at a temperature of greater than 30°C.

9. The method of any of claims 1-8 wherein a mixture of sulfuric acid and nitric acid is added to the graphite.

10. The method of any of claims 1-9 wherein sparging continues until the concentration of chlorine dioxide in the graphite mixture drops below 1000 ppm, 100 ppm, 10 ppm, 1 ppm or 0.1 ppm.

11. The method of any of claims 1-10 wherein the graphite is oxidized in a bubble column reactor.

12. The method of any of claims 1-11 wherein the graphite is oxidized in the absence of a mechanical agitator.

13. The method of any of claims 1-12 comprising reacting greater than 95%, 98% or 99% of the added chlorate in less than 10 hours.

14. The method of any of claims 1-13 wherein the chlorine dioxide concentration in a headspace above the graphite mixture is reduced to less than 500 or less than 100 ppm in less than 12 hours, less than 10 hours or less than 8 hours.

15. The method of any of claims 1-14 further comprising partially reducing the oxidized graphite to obtain a rGOW particle having a BET surface area of greater than 600 m2/g, a crystallinity of <30%, a Raman D/G band ratio of >1.0 and/or no discernible graphite peak in the XRD spectrum between 25° and 30°.

16. The method of claim 15 wherein the chlorate solution comprises a chlorate salt including a chlorate anion and a cation, and the rGOW particle comprises less than 1000 ppm by weight of the cation.

17. The method of any of claims 1-16 wherein the weight ratio of total acid to graphite is less than 15:1, less than 20:1, less than 25:1, less than 30:1, or less than 40:1.

18. The method of any of claims 1-17 wherein the weight ratio of total water to graphite in the graphite mixture, after ceasing the chlorate feed, is less than 11:1, less than 10:1, less than 9:1, less than 8:1, less than 7:1 or less than 6:1.
